# EUROPÄISCHE PATENTSCHRIFT

(11) **EP 1 130 023 B1**
(45) Veröffentlichungstag und Bekanntmachung des Hinweises auf die Patenterteilung: **11.08.2004**
(21) Anmeldenummer: 01103386.7
(22) Anmeldetag: 14.02.2001
(51) Int. Cl.: C07F 7/18

(54) **Verfahren zur Herstellung von Organosilylalkylpolysulfanen**
Process for preparing organosilylalkyl polysulfanes
Procédé de préparation d'organosilylalkylpolysulfanes

(30) Priorität: 01.03.2000 DE 10009790
(43) Veröffentlichungstag der Anmeldung: 05.09.2001
(73) Patentinhaber: Degussa AG, 40474 Düsseldorf (DE)
(72) Erfinder: Michel, Rudolf, 63579 Freigericht (DE); Münzenberg, Jörg, Dr., 63457 Hanau (DE); Werner, Willi, 63571 Gelnhausen (DE); Zezulka, Gerd Rainhard, 63456 Hanau (DE)

(56) Entgegenhaltungen:
- DE-C- 19 734 295

## Beschreibung

Die Erfindung betrifft ein Verfahren zur Herstellung von Organosilylalkylpolysulfanen.

Es ist bekannt, daß Organosilylalkylpolysulfane wie Bis-(3-triethoxysilylpropyl)tetrasulfan (DE 2 141 159) und - disulfan als Silanhaftvermittler oder Verstärkungsadditiv in oxidisch gefüllten Kautschukmischungen eingesetzt werden. Die Kautschukmischungen werden unter anderem für technische Gummiartikel und für Teile des Autoreifens, insbesondere für Laufflächen, verwendet (DE 2 141 159, DE 2 212 239, US 3 978 103, US 4 048 206).

Verschiedene Verfahren zur Herstellung von Organosilylalkylpolysulfanen werden in der Literatur beschrieben. Dabei stellen Verfahren die wirtschaftlichste und am einfachsten zu realisierende Alternative dar, die von technisch leicht zugänglichen Organosilylalkylhalogeniden ausgehen. Diese Organosilanalkylhalogenide werden mit ionischen Polysulfiden umgesetzt, wobei durch nucleophile Substitution die Halogenid-Funktionen zweier Moleküle gegen Polysulfaneinheiten ausgetauscht und somit miteinander verbunden werden.

Bei diesem Verfahren stellt die Herstellung des nucleophilen Polysulfids die größte Hürde dar. Zwar sind ionische Polysulfide in wäßriger Phase auf bekannte Weise aus Reaktionen von Schwefel mit Alkalisulfid-Hydraten, Alkalihydrogensulfid-Hydraten oder Natronlauge relativ leicht zugänglich und die dabei entstehenden wäßrigen Alkalipolysulfid-Lösungen lassen sich mit Organosilylalkylhalogeniden in einem phasentransferkatalytischen System zu den analogen Polysulfanen umsetzen (EP 694552, EP 794186, EP 839816). Jedoch besteht bei dem bekannten Verfahren immer der Nachteil, daß durch Hydrolyse und Kondensation große Teile des Alkoxysilan-Ausgangsmaterials in unwirksame feste Polysiloxane überführt werden. Die mit dem bekannten Verfahren hergestellten Organosilanpolysulfide zeichnen sich zudem durch eine ungenügende Lagerstabilität aus.

Diese Nachteile lassen sich umgehen, wenn mit wasserfreien beziehungsweise nahezu wasserfreien Einsatzstoffen in organischer Lösung gearbeitet wird. Aus US 5399739 und EP 705838 sind Prozesse bekannt, bei denen ionische Polysulfide durch Reaktion von Alkoholaten mit Schwefelwasserstoff hergestellt werden, die dann wiederum mit Schwefel und dem entsprechenden Organosilylalkylhalogenid umgesetzt werden. Nachteilig an diesen Prozessen ist, daß zur Herstellung des wasserfreien Sulfids sicherheitstechnisch und toxikologisch sehr bedenkliches Schwefelwasserstoffgas und wenig lagerstabile Alkoholate eingesetzt werden.

Eine technisch bessere Lösung zur Herstellung von wasserfreien beziehungsweise nahezu wasserfreien Sulfiden ist die Trocknung von kommerziell in großen Mengen erhältlichen Alkalisulfiden, vornehmlich Natriumsulfid-Hydrat. Aus JP 7228588 ist bekannt, daß die Trocknung sowohl azeotrop als auch im Vakuum unter Erhitzen erfolgen kann und die so hergestellten wasserfreien beziehungsweise nahezu wasserfreien Sulfide mit Schwefel zu Alkalipolysulfiden umgesetzt werden können. Diese Polysulfide wiederum reagieren mit Organosilylalkylhalogeniden zu den entsprechenden Polysulfanen.

Ein ähnliches Verfahren mit einer Variation der azeotropen Trocknung des Alkalisulfids ist aus EP 795558 bekannt.

Nachteilig an diesen Verfahren ist, daß zuerst in einem vorgelagerten Prozeßschritt aus dem Alkalisulfid und Schwefel ein Polysulfid hergestellt werden muß, daß erst anschließend durch Reaktion mit dem Organosilylalkylhalogenid in das gewünschte Polysulfid überführt wird.

In DE 19651849 wird ein Verfahren beschrieben, bei dem die Herstellung des Polysulfids bereits während der Trocknung geschieht. Somit kann der Prozeßschritt der Polysulfid-Herstellung vermieden und Kosten gespart werden, was zur Wirtschaftlichkeit des Verfahrens wesentlich beiträgt.

Weitere Verfahren, die Organosilylalkylpolysulfane ebenfalls aus wasserfreiem beziehungsweise nahezu wasserfreiem ionischen Sulfiden herstellen und eine vorgelagerte Polysulfid-Herstellung vermeiden, sind in DE 19734295 und EP 949263 beschrieben.

Allen zitierten Verfahren ist gemeinsam, daß ein wasserfreies Polysulfid in einem polaren organischen Lösungsmittel vorgelegt wird und zu dieser Lösung/Suspension das Organosilylalkylhalogenid zugegeben wird. Bei einer solchen Vorgehensweise resultieren stark gefärbte, häufig auch unangenehm riechende Produkte.

Aufgabe der Erfindung ist es, ein Verfahren zur Verfügung zu stellen, bei dem wenig gefärbte und gering geruchsbelastete Organosilanpolysulfide hergestellt werden.

Gegenstand der Erfindung ist ein Verfahren zur Herstellung von Organosilylalkylpolysulfanen der allgemeinen Formel

(R¹R²R³SiR⁴)₂Sₓ (I)

in der bedeuten
- R¹, R², R³:: gleich oder verschieden voneinander, verzweigte und unverzweigte Alkyl- und/oder Alkoxygruppen mit einer Kettenlänge von 1 - 8 C-Atomen, bevorzugt 1 - 3 C-Atomen, Arylreste, insbesondere Phenyl, Toluyl, Benzyl, wobei mindestens eine Alkoxygruppe vorhanden ist;
- R⁴: zweiwertiger Alkylenrest mit einer Kettenlänge von 1 8 C-Atomen, bevorzugt 1 bis 5 C-Atome, besonders bevorzugt Methylen, Ethylen, i-Propylen, n-Propylen, i-Butylen, n-Butylen, n-Pentylen, 2-Methylbutylen, 3-Methylbutylen, 1,3-Dimethylpropylen und 2,3-Dimethylpropylen, oder

-(CH₂)ₙ-C₆H₄-(CH₂)ₙ-

mit n = 1 - 4;
- x: eine Zahl > 1, bevorzugt zwischen 2 und 6, ist,
durch Umsetzung eines Organosilylalkylhalogenids der allgemeinen Formel

R¹R²R³SiR⁴X (II)

in der
- R¹, R², R³ und R⁴: die oben angegebene Bedeutung besitzen und
- X :: Chlor, Brom oder Jod ist
und einem wasserfreien beziehungsweise nahezu wasserfreien ionischen Sulfid der allgemeinen Formel

M⁺₂S²⁻ (III)

in der M⁺ für ein Alkalimetallkation, bevorzugt Natriumoder Kaliumkation, ein Ammoniumion, ein halbes Erdalkalimetallkation oder ein halbes Zinkkation steht,
und elementarem Schwefel, welches dadurch gekennzeichnet ist,
daß in einem polaren organischen Lösungsmittel der elementare Schwefel und Organosilylalkylhalogenid vorgelegt und zu dieser Suspension das wasserfreie beziehungsweise nahezu wasserfreie ionische Sulfid gegeben wird.

Nach der Reaktion kann das Organosilylalkylpolysulfan isoliert werden durch Abfiltrieren des ausgefallenen Halogenids und destillative Abtrennung des Lösungsmittels.

Wegen der Hydrolyseanfälligkeit von Organosilylalkylhalogenid (II) müssen die ionischen Sulfide (III) wasserfrei beziehungsweise nahezu wasserfrei sein. Unter nahezu wasserfreiem ionischem Sulfid (III) werden Verbindungen gemäß Formel (III) mit maximal 10 Gew.-%, vorzugsweise 0 - 5 Gew.-%, besonders bevorzugt 0 - 2 Gew.-%, Wasser verstanden. Die nahezu wasserfreien ionischen Sulfide (III) können auf verschiedenen Wegen erhalten werden:
Umsetzung von Alkalialkoholaten mit Schwefelwasserstoff (EP 0 705 838).
Umsetzung von Ammoniakgas mit Schwefelwasserstoff (DE 26 48 241).
Trocknung von Alkalisulfid-Hydraten (DE 196 10 281, JP 7 228 588 und DE 196 51 849)

Dabei ist es unerheblich, ob die Trocknung der Alkalisulfid-Hydrate azeotrop oder durch Erhitzen im Vakuum durchgeführt wird. Vorzugsweise kann das benötigte ionische Sulfid nach dem in der DE 196 51 849 beschriebenen Verfahren hergestellt werden.
Das ionische Sulfid (III) kann ohne Einfluß auf die Reaktionsausbeute sowohl als vermahlenes Pulver oder in Form von Plättchen eingesetzt werden, wie sie bei handelsüblichen Alkalisulfid-Hydraten angeboten werden.

Die zur Reaktion notwendige Menge an ionischem Sulfid (III) kann als Ganzes oder in Teilmengen zu der aus dem Lösungsmittel, dem Organosilylalkylhalogenid (II) und dem elementarem Schwefel bestehenden Suspension gegeben werden. Das ionische Sulfid (III) kann kontinuierlich oder diskontinuierlich zugegeben werden.

Der Schwefel kann in fester Form, zum Beispiel als handelsübliches Schwefelpulver oder Granulat, oder in schmelzflüssiger Form zugegeben werden. Zur Beschleunigung des Reaktionsverlaufs kann der Schwefel in feinverteilter Form, zum Beispiel als feingemahlenes Schwefelpulver oder in feine Tropfen verdüste Schmelze, eingesetzt werden.

Als organische Lösungsmittel können im Prinzip alle polaren Substanzen eingesetzt werden, in denen das ionische Sulfid (III) wenigstens teilweise löslich ist, und die nicht mit dem Organosilylalkylhalogenid (II) reagieren.

Vorzugsweise können als organische Lösungsmittel lineare oder verzweigte Alkohole mit 1 - 8 C-Atomen, wie zum Beispiel Methyl-, Ethyl-, Propyl-, Butyl- oder Pentylalkohol, Cycloalkylalkohole mit 5-8 C-Atomen, Phenol oder Benzylalkohol, verwendet werden.

Sinnvollerweise kann, um eine Umesterung zu vermeiden, der jeweils zu den Gruppen R¹, R² und R³ korrespondierende Alkohol verwendet werden. Gegebenenfalls kann auch die Verwendung eines Gemisches dieser Alkohole von Vorteil sein, zum Beispiel, wenn verschiedene Alkoxygruppen R¹, R², R³ in der Verbindung II vorliegen.

Die Molverhältnisse der einzelnen Reaktanden zueinander richten sich danach, welche mittlere Schwefelkettenlänge im damit zu produzierenden Organosilylalkylpolysulfan (I) eingestellt und welcher Restgehalt an Organosilylalkylhalogeniden (II) im Endprodukt vorhanden sein soll. Dabei steuert das Molverhältnis des ionischen Sulfids der Formel (III) zum eingesetzten elementarem Schwefel die mittlere Polysulfankettenlänge im Endprodukt. Für das erfindungsgemäße Verfahren kann man ionisches Sulfid : Schwefel in einem molarem Verhältnis von mindestens 1 : 0,1, bevorzugt 1 : 0,8, bis 1 : 5,2 einsetzen.
Das Molverhältnis zwischen ionischem Sulfid und dem Organosilylalkylhalogenid bestimmt den Restgehalt an dem Einsatzstoff im Endprodukt. Für das erfindungsgemäße Verfahren kann man ein Verhältnis von ionischem Sulfid zu Organosilylalkylhalogenid von 1 : 1 bis 1 : 3, bevorzugt ein Verhältnis von 1 : 1,5 bis 1 : 2,2, verwenden.

Die Umsetzung kann unter Luft- und Wasser(Feuchtigkeits)ausschluß durchgeführt werden, um die Bildung von Nebenprodukten zu unterdrücken beziehungsweise weitgehend zu vermeiden. Die Reaktion kann bei erhöhter Temperatur durchgeführt werden. Dabei ist es für das erfindungsgemäße Verfahren unwesentlich, ob zur Erreichung der Reaktionstemperatur das Reaktionsgemisch von außen erwärmt wird oder sich durch freiwerdende Wärme aufgrund der exothermen Reaktion von allein erwärmt. Die Reaktion kann zwischen Raumtemperatur und 200°C, vorzugsweise zwischen 40°C und der Siedetemperatur des eingesetzten Lösungsmittels, durchgeführt werden. Die Reaktion kann unter vermindertem Druck, Normaldruck oder leicht erhöhtem Druck durchgeführt werden.

Die durch das erfindungsgemäße Verfahren hergestellten Organosilanpolysulfide haben den Vorteil, daß diese weniger gefärbt und geruchsbelastend sind als die bekannten Organosilanpolysulfide.

### Beispiele:

### Vergleichsbeispiel 1: Herstellung von Bis(triethoxysilylpropyl)disulfan

17,8 kg nahezu wasserfreies Natriumsulfid werden in einem emaillierten 500 l-Reaktor in 190 l Ethanol vorgelegt. Dazu werden 13,85 kg Schwefel in schmelzflüssiger Form durch eine feine Düse zugegeben. Die Mischung wird auf 50°C erhitzt und bei dieser Temperatur 190 1 3-Chlorpropyltriethoxysilan innerhalb von 10 min zudosiert. Aufgrund freiwerdender Exothermie erhitzt sich der Reaktorinhalt auf 74°C. Bei dieser Temperatur werden weitere 4,45 kg nahezu wasserfreies Natriumsulfid zugesetzt. Drei weitere Portionen Natriumsulfid werden mit einem zeitlichen Abstand von jeweils 5 min zugegeben, wobei der Reaktorinhalt sich auf 82°C erwärmt. Nach Beendigung der Natriumsulfid-Zugabe wird 1,5 h bei 82 - 83°C gehalten und nach Abkühlen ausgefallenes Natriumchlorid abgetrennt. Nach Eindampfen des Reaktionsgemischs im Vakuum und erneuter Feinfiltration wird ein gelbes Produkt erhalten. Eine HPLC-Analyse bestätigt das Vorliegen eines Produkts mit einer mittleren Polysulfankettenlänge von 2.

### Beispiel 1: Herstellung von Bis(triethoxysilylpropyl)disulfan

Im Reaktor des Vergleichsbeispiel 1 wird in ein Gemisch aus jeweils 190 1 Ethanol und 3-Chlorpropyltriethoxysilan 13,85 kg Schwefel in schmelzflüssiger Form durch eine feine Düse zudosiert. Anschließend werden 17,8 kg nahezu wasserfreies Natriumsulfid zugegeben, wobei der Reaktorinhalt sich durch freiwerdende Exothermie auf 60°C erhitzt. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt weiter auf 82°C. Nach Beendigung der Natriumsulfid-Zugabe wird noch 1,5 h bei 82 - 83°C gehalten und anschließende abgekühlt. Es wird wie im Vergleichsbeispiel 1 aufgearbeitet. Man erhält ein nahezu wasserklares Produkt. Eine HPLC-Analyse bestätigt das Vorliegen eines Polysulfangemischs mit einer mittleren Kettenlänge von 2.

### Beispiel 2: Herstellung von Bis(triethoxysilylpropyl)disulfan

Im Reaktor des Vergleichsbeispiels 1 werden 129 l Ethanol vorgelegt. Dazu gibt man 129 l 3-Chlorpropyltriethoxysilan. In das entstehende Gemisch werden 13,85 kg Schwefel in schmelzflüssiger Form durch eine feine Düse zudosiert. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 3: Herstellung von Bis(triethoxysilylpropyl)disulfan

Im Reaktor des Vergleichsbeispiels 1 werden 129 l 3-Chlorpropyltriethoxysilan vorgelegt. Dazu gibt man 129 l Ethanol. In das entstehende Gemisch werden 13,85 kg Schwefel in schmelzflüssiger Form durch eine feine Düse zudosiert. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 4: Herstellung von Bis(triethoxysilylpropyl)disulfan

Im Reaktor des Vergleichsbeispiels 1 werden 129 l Ethanol vorgelegt. Dazu werden 13,85 kg Schwefel in schmelzflüssiger Form durch eine feine Düse zudosiert. Zu dem Gemisch gibt man 129 l 3-Chlorpropyltriethoxysilan. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 5: Herstellung von Bis(triethoxysilylpropyl)disulfan

Im Reaktor des Vergleichsbeispiels 1 werden 129 l 3-Chlorpropyltriethoxysilan vorgelegt. Dazu werden 13,85 kg Schwefel in schmelzflüssiger Form durch eine feine Düse zudosiert. Zu dem Gemisch gibt man 129 l Ethanol. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 6: Herstellung von Bis(triethoxysilylpropyl)disulfan

Im Reaktor des Vergleichsbeispiels 1 wird ein Gemisch aus 129 l Ethanol und 129 l 3-Chlorpropyltriethoxysilan vorgelegt. Dazu werden 13,85 kg Schwefel in Form eines Granulats dosiert. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 7: Herstellung von Bis(triethoxysilylpropyl)disulfan

Im Reaktor des Vergleichsbeispiels 1 werden 129 1 Ethanol vorgelegt. Dazu gibt man 129 l 3-Chlorpropyltriethoxysilan. In das entstehende Gemisch werden 13,85 kg Schwefel in Form eines Granulats zudosiert. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt.

Eine HPLC-Analyse bestätigt wiederum das Vorliegen eines Polysulfangemisches mit einer mittleren Kettenlänge von 2.

### Beispiel 8: Herstellung von Bis(triethoxysilylpropyl)disulfan

Im Reaktor des Vergleichsbeispiels 1 werden 129 l 3-Chlorpropyltriethoxysilan vorgelegt. Dazu gibt man 129 l Ethanol. In das entstehende Gemisch werden 13,85 kg Schwefel in Form eines Granulats zudosiert. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 9: Herstellung von Bis(triethoxysilylpropyl)disulfan

Im Reaktor des Vergleichsbeispiels 1 werden 129 l Ethanol vorgelegt. Dazu werden 13,85 kg Schwefel in Form eines Granulats zudosiert. Zu dem Gemisch gibt man 129 l 3-Chlorpropyltriethoxysilan. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt.

Eine HPLC-Analyse bestätigt wiederum das Vorliegen eines Polysulfangemisches mit einer mittleren Kettenlänge von 2.

### Beispiel 10: Herstellung von Bis(triethoxysilylpropyl)disulfan

Im Reaktor des Vergleichsbeispiels 1 werden 129 l 3-Chlorpropyltriethoxysilan vorgelegt. Dazu werden 13,85 kg Schwefel in Form eines Granulats zudosiert. Zu dem Gemisch gibt man 129 l Ethanol. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 11: Herstellung von Bis(triethoxysilylpropyl)disulfan

Im Reaktor des Vergleichsbeispiels 1 wird ein Gemisch aus 129 l Ethanol und 129 l 3-Chlorpropyltriethoxysilan vorgelegt. Dazu werden 13,85 kg Schwefel in Form eines Pulvers dosiert. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt.

Eine HPLC-Analyse bestätigt wiederum das Vorliegen eines Polysulfangemisches mit einer mittleren Kettenlänge von 2.

### Beispiel 12: Herstellung von Bis(triethoxysilylpropyl)disulfan

Im Reaktor des Vergleichsbeispiels 1 werden 129 l Ethanol vorgelegt. Dazu gibt man 129 l 3-Chlorpropyltriethoxysilan. In das entstehende Gemisch werden 13,85 kg Schwefel in Form eines Pulvers zudosiert. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 13: Herstellung von Bis(triethoxysilylpropyl)disulfan

Im Reaktor des Vergleichsbeispiels 1 werden 129 l 3-Chlorpropyltriethoxysilan vorgelegt. Dazu gibt man 129 l Ethanol. In das entstehende Gemisch werden 13,85 kg Schwefel in Form eines Pulvers zudosiert. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 14: Herstellung von Bis(triethoxysilylpropyl)disulfan

Im Reaktor des Vergleichsbeispiels 1 werden 129 l Ethanol vorgelegt. Dazu werden 13,85 kg Schwefel in Form eines Pulvers zudosiert. Zu dem Gemisch gibt man 129 l 3-Chlorpropyltriethoxysilan. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 15: Herstellung von Bis(triethoxysilylpropyl)disulfan

Im Reaktor des Vergleichsbeispiels 1 werden 129 l 3-Chlorpropyltriethoxysilan vorgelegt. Dazu werden 13,85 kg Schwefel in Form eines Pulvers zudosiert. Zu dem Gemisch gibt man 129 l Ethanol. Anschließend werden 17,8 kg nahezu wasserfreies Natriumsulfid zugegeben. Dabei erwärmt sich der Reaktorinhalt aufgrund der Exothermie auf 60°C. Ab dieser Temperatur werden 4 weitere Portionen von jeweils 4,45 kg Natriumsulfid in zeitlichen Abständen von jeweils 5 min zugegeben. Dabei erwärmt sich der Reaktorinhalt auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2.

### Beispiel 16: Herstellung von Bis(triethoxysilylpropyl)disulfan

Im Reaktor des Vergleichsbeispiels 1 wird ein Gemisch aus 129 l Ethanol und 129 l 3-Chlorpropyltriethoxysilan vorgelegt. Dazu werden 13,85 kg Schwefel in schmelzflüssiger Form durch eine feine Düse dosiert. Anschließend werden 35,6 kg nahezu wasserfreies Natriumsulfid zugegeben. Dabei erwärmt sich der Reaktorinhalt aufgrund der Exothermie auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2, wobei allerdings ein hoher Monosulfangehalt zu verzeichnen ist.

### Beispiel 17: Herstellung von Bis(triethoxysilylpropyl)disulfan

Im Reaktor des Vergleichsbeispiels 1 wird ein Gemisch aus 129 l Ethanol und 129 l 3-Chlorpropyltriethoxysilan vorgelegt. Dazu werden 13,85 kg Schwefel in Form eines Granulats dosiert. Anschließend werden 35,6 kg nahezu wasserfreies Natriumsulfid zugegeben. Dabei erwärmt sich der Reaktorinhalt aufgrund der Exothermie auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2, wobei allerdings ein hoher Monosulfangehalt zu verzeichnen ist.

### Beispiel 18: Herstellung von Bis(triethoxysilylpropyl)disulfan

Im Reaktor des Vergleichsbeispiels 1 wird ein Gemisch aus 129 l Ethanol und 129 l 3-Chlorpropyltriethoxysilan vorgelegt. Dazu werden 13,85 kg Schwefel in Form eines Pulvers dosiert. Anschließend werden 35,6 kg nahezu wasserfreies Natriumsulfid zugegeben. Dabei erwärmt sich der Reaktorinhalt aufgrund der Exothermie auf 82°C. Es wird noch 1,5 h bei 82 - 83°C gehalten und anschließend abgekühlt. Es wird wie im Vergleichsbeispiel 1 aufgearbeitet. Man erhält ein nahezu wasserklares Produkt. Eine HPLC-Analyse bestätigt wiederum das Vorliegen eines Polysulfangemisches mit einer mittleren Kettenlänge von 2, wobei allerdings ein hoher Monosulfangehalt zu verzeichnen ist.

### Vergleichsbeispiel 2: Herstellung von Bis(triethoxysilylpropyl)tetrasulfan

Im Reaktor des Vergleichsbeispiel 1 wird 23 kg nahezu trockenes Natriumsulfid in 125 l Ethanol vorgelegt. Dazu werden 28,4 kg Schwefel in schmelzflüssiger Form durch eine feine Düse zugegeben. Die Mischung wird auf 55°C erhitzt und bei dieser Temperatur 129 l 3-Chlorpropyltriethoxysilan innerhalb von 50 min zudosiert. Aufgrund freiwerdender Exothermie erhitzt sich der Reaktorinhalt auf 77°C. Es wird weitere 1,5 h auf 82 - 83°C gehalten und anschließend abgekühlt. Ausgefallenes Natriumchlorid wird abgetrennt. Nach Eindampfen des Reaktionsgemischs im Vakuum und erneuter Feinfiltration wird ein orange Produkt erhalten. Eine HPLC-Analyse bestätigt das Vorliegen eines Produkts mit einer mittleren Polysulfankettenlänge von 4.

### Beispiel 19: Herstellung von Bis(triethoxysilylpropyl)-tetrasulfan

Im Reaktor des Vergleichsbeispiel 1 wird in ein Gemisch aus jeweils 129 l Ethanol und 3-Chlorpropyltriethoxysilan 28,4 kg Schwefel in schmelzflüssiger Form durch eine feine Düse zudosiert. Anschließend werden 23,0 kg nahezu wasserfreies Natriumsulfid zugegeben, wobei der Reaktorinhalt sich durch freiwerdende Exothermie auf 83°C erhitzt. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt das Vorliegen eines Polysulfangemischs mit einer mittleren Kettenlänge von 4.

### Beispiel 20: Herstellung von Bis(triethoxysilylpropyl)tetrasulfan

Im Reaktor des Vergleichsbeispiels 1 werden 129 l Ethanol vorgelegt. Dazu gibt man 129 l 3-Chlorpropyltriethoxysilan. In das entstehende Gemisch werden 28, 4 kg Schwefel in schmelzflüssiger Form durch eine feine Düse zudosiert. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 21: Herstellung von Bis(triethoxysilylpropyl)tetrasulfan

Im Reaktor des Vergleichsbeispiels 1 werden 129 l 3-Chlorpropyltriethoxyslian vorgelegt. Dazu gibt man 129 l Ethanol. In das entstehende Gemisch werden 28, 4 kg Schwefel in schmelzflüssiger Form durch eine feine Düse zudosiert. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 22: Herstellung von Bis(triethoxysilylpropyl)tetrasulfan

Im Reaktor des Vergleichsbeispiels 1 werden 129 l Ethanol vorgelegt. Dazu werden 28, 4 kg Schwefel in schmelzflüssiger Form durch eine feine Düse dosiert. Zu dem entstehenden Gemisch gibt man 129 l 3-Chlorpropyltriethoxysilan. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 23: Herstellung von Bis(triethoxysilylpropyl)tetrasulfan

Im Reaktor des Vergleichsbeispiels 1 werden 129 l 3-Chlorpropyltriethoxysilan vorgelegt. Dazu werden 28, 4 kg Schwefel in schmelzflüssiger Form durch eine feine Düse dosiert. Zu dem entstehenden Gemisch gibt man 129 l Ethanol. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 24: Herstellung von Bis(triethoxysilylpropyl)tetrasulfan

Im Reaktor des Vergleichsbeispiels 1 werden 129 l Ethanol vorgelegt. Dazu gibt man 129 l 3-Chlorpropyltriethoxysilan. In das entstehende Gemisch werden 28, 4 kg Schwefel in Form eines Granulats dosiert. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 25: Herstellung von Bis(triethoxysilylpropyl)tetrasulfan

Im Reaktor des Vergleichsbeispiels 1 werden 129 l 3-Chlorpropyltriethoxyslian vorgelegt. Dazu gibt man 129 l Ethanol. In das entstehende Gemisch werden 28, 4 kg Schwefel in Form eines Granulats dosiert. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 26: Herstellung von Bis(triethoxysilylpropyl)tetrasulfan

Im Reaktor des Vergleichsbeispiels 1 werden 129 l Ethanol vorgelegt. Dazu werden 28, 4 kg Schwefel in Form eines Granulats dosiert. Zu dem entstehenden Gemisch gibt man 129 1 3-Chlorpropyltriethoxysilan. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 27: Herstellung von Bis(triethoxysilylpropyl)tetrasulfan

Im Reaktor des Vergleichsbeispiels 1 werden 129 l 3-Chlorpropyltriethoxysilan vorgelegt. Dazu werden 28, 4 kg Schwefel in Form eines Granulats dosiert. Zu dem entstehenden Gemisch gibt man 129 1 Ethanol. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 28: Herstellung von Bis(triethoxysilylpropyl)tetrasulfan

Im Reaktor des Vergleichsbeispiels 1 werden 129 l Ethanol vorgelegt. Dazu gibt man 129 l 3-Chlorpropyltriethoxysilan. In das entstehende Gemisch werden 28, 4 kg Schwefel in Form eines Pulvers dosiert. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 29: Herstellung von Bis(triethoxysilylpropyl)tetrasulfan

Im Reaktor des Vergleichsbeispiels 1 werden 129 l 3-Chlorpropyltriethoxyslian vorgelegt. Dazu gibt man 129 l Ethanol. In das entstehende Gemisch werden 28, 4 kg Schwefel in Form eines Pulvers dosiert. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 30: Herstellung von Bis(triethoxysilylpropyl)tetrasulfan

Im Reaktor des Vergleichsbeispiels 1 werden 129 l Ethanol vorgelegt. Dazu werden 28, 4 kg Schwefel in Form eines Pulvers dosiert. Zu dem entstehenden Gemisch gibt man 129 l 3-Chlorpropyltriethoxysilan. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 31: Herstellung von Bis(triethoxysilylpropyl)tetrasulfan

Im Reaktor des Vergleichsbeispiels 1 werden 129 l 3-Chlorpropyltriethoxysilan vorgelegt. Dazu werden 28, 4 kg Schwefel in Form eines Pulvers dosiert. Zu dem entstehenden Gemisch gibt man 129 l Ethanol. Anschließend werden 23,0 kg nahezu wasserfreies Natriumsulfid zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 32: Herstellung von Bis(triethoxysilylpropyl)tetrasulfan

Im Reaktor des Vergleichsbeispiels 1 wird in ein Gemisch aus jeweils 129 l Ethanol und 3-Chlorpropyltriethoxysilan, 28, 4 kg Schwefel in schmelzflüssiger Form durch eine feine Düse zudosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 33: Herstellung von Bis(triethoxysilylpropyl)tetrasulfan

Im Reaktor des Vergleichsbeispiels 1 werden 129 l Ethanol vorgelegt. Dazu gibt man 129 l 3-Chlorpropyltriethoxysilan. In das entstehende Gemisch werden 28, 4 kg Schwefel in schmelzflüssiger Form durch eine feine Düse zudosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 34: Herstellung von Bis(triethoxysilylpropyl)tetrasulfan

Im Reaktor des Vergleichsbeispiels 1 werden 129 l 3-Chlorpropyltriethoxyslian vorgelegt. Dazu gibt man 129 l Ethanol. In das entstehende Gemisch werden 28, 4 kg Schwefel in schmelzflüssiger Form durch eine feine Düse zudosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 35: Herstellung von Bis(triethoxysilylpropyl)tetrasulfan

Im Reaktor des Vergleichsbeispiels 1 werden 129 l Ethanol vorgelegt. Dazu werden 28, 4 kg Schwefel in schmelzflüssiger Form durch eine feine Düse dosiert. Zu dem entstehenden Gemisch gibt man 129 l 3-Chlorpropyltriethoxysilan. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 36: Herstellung von Bis(triethoxysilylpropyl)tetrasulfan

Im Reaktor des Vergleichsbeispiels 1 werden 129 l 3-Chlorpropyltriethoxysilan vorgelegt. Dazu werden 28, 4 kg Schwefel in schmelzflüssiger Form durch eine feine Düse dosiert. Zu dem entstehenden Gemisch gibt man 129 l Ethanol. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 37: Herstellung von Bis(triethoxysilylpropyl)tetrasulfan

Im Reaktor des Vergleichsbeispiels 1 wird in ein Gemisch aus jeweils 129 l Ethanol und 3-Chlorpropyltriethoxysilan, 28, 4 kg Schwefel in Form eines Granulats dosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 38: Herstellung von Bis(triethoxysilylpropyl)tetrasulfan

Im Reaktor des Vergleichsbeispiels 1 werden 129 l Ethanol vorgelegt. Dazu gibt man 129 l 3-Chlorpropyltriethoxysilan. In das entstehende Gemisch werden 28, 4 kg Schwefel in Form eines Granulats dosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 39: Herstellung von Bis(triethoxysilylpropyl)tetrasulfan

Im Reaktor des Vergleichsbeispiels 1 werden 129 l 3-Chlorpropyltriethoxyslian vorgelegt. Dazu gibt man 129 l Ethanol. In das entstehende Gemisch werden 28, 4 kg Schwefel in Form eines Granulats dosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 40: Herstellung von Bis(triethoxysilylpropyl)tetrasulfan

Im Reaktor des Vergleichsbeispiels 1 werden 129 l Ethanol vorgelegt. Dazu werden 28, 4 kg Schwefel in Form eines Granulats dosiert. Zu dem entstehenden Gemisch gibt man 129 1 3-Chlorpropyltriethoxysilan. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 41: Herstellung von Bis(triethoxysilylpropyl)tetrasulfan

Im Reaktor des Vergleichsbeispiels 1 werden 129 l 3-Chlorpropyltriethoxysilan vorgelegt. Dazu werden 28, 4 kg Schwefel in Form eines Granulats dosiert. Zu dem entstehenden Gemisch gibt man 129 l Ethanol. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 42: Herstellung von Bis(triethoxysilylpropyl)tetrasulfan

Im Reaktor des Vergleichsbeispiels 1 wird in ein Gemisch aus jeweils 129 l Ethanol und 3-Chlorpropyltriethoxysilan, 28, 4 kg Schwefel in Form eines Pulvers dosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 43: Herstellung von Bis(triethoxysilylpropyl)tetrasulfan

Im Reaktor des Vergleichsbeispiels 1 werden 129 l Ethanol vorgelegt. Dazu gibt man 129 l 3-Chlorpropyltriethoxysilan. In das entstehende Gemisch werden 28, 4 kg Schwefel in Form eines Pulvers dosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 44: Herstellung von Bis(triethoxysilylpropyl)tetrasulfan

Im Reaktor des Vergleichsbeispiels 1 werden 129 l 3-Chlorpropyltriethoxyslian vorgelegt. Dazu gibt man 129 l Ethanol. In das entstehende Gemisch werden 28, 4 kg Schwefel in Form eines Pulvers dosiert. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 45: Herstellung von Bis(triethoxysilylpropyl)tetrasulfan

Im Reaktor des Vergleichsbeispiels 1 werden 129 l Ethanol vorgelegt. Dazu werden 28, 4 kg Schwefel in Form eines Pulvers dosiert. Zu dem entstehenden Gemisch gibt man 129 l 3-Chlorpropyltriethoxysilan. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

### Beispiel 46: Herstellung von Bis(triethoxysilylpropyl)tetrasulfan

Im Reaktor des Vergleichsbeispiels 1 werden 129 l 3-Chlorpropyltriethoxysilan vorgelegt. Dazu werden 28, 4 kg Schwefel in Form eines Pulvers dosiert. Zu dem entstehenden Gemisch gibt man 129 l Ethanol. Anschließend werden insgesamt 23,0 kg nahezu wasserfreies Natriumsulfid in 10 gleichen Portionen mit einem zeitlichen Abstand von jeweils 7 min zugegeben. Dabei erwärmt sich der Reaktorinhalt aufgrund der Exothermie auf 83°C. Es wird noch 1,5 h bei 82 - 83°C gehalten und anschließend abgekühlt. Es wird wie im Vergleichsbeispiel 1 aufgearbeitet. Man erhält ein gelbes Produkt. Eine HPLC-Analyse bestätigt wiederum das Vorliegen eines Polysulfangemisches mit einer mittleren Kettenlänge von 4.

## Patentansprüche

1. Verfahren zur Herstellung von Organosilylalkylpolysulfanen der allgemeinen Formel
(R¹R²R³SiR⁴)₂Sₓ (I)
in der bedeuten
R¹, R², R³ : gleich oder verschieden voneinander, verzweigte und unverzweigte Alkyl- und/oder Alkoxygruppen mit einer Kettenlänge von 1 - 8 C-Atomen, Arylreste, wobei mindestens eine Alkoxygruppe vorhanden ist,
R⁴ zweiwertiger Alkylenrest mit einer Kettenlänge von 1 - 8 C-Atomen, oder
-(CH₂)ₙ-C₆H₄-(CH₂)ₙ-
mit n = 1 - 4;
x eine Zahl > 1 ist
durch Umsetzung eines Organosilylalkylhalogenids der allgemeinen Formel
R¹R²R³SiR⁴X (II)
in der
R¹, R², R³ und R⁴ die oben angegebene Bedeutung besitzen und
X: Chlor, Brom oder Jod ist
und einem wasserfreien beziehungsweise nahezu wasserfreien ionischen Sulfid der allgemeinen Formel
M⁺ ₂S²⁻ (III)
in der M⁺ für ein Alkalimetallkation, ein Ammoniumion, ein halbes Erdalkalimetallkation oder ein halbes Zinkkation steht,
und elementarem Schwefel, **dadurch gekennzeichnet, daß** in einem polaren organischen Lösungsmittel der elementare Schwefel und Organosilylalkylhalogenid vorgelegt und zu dieser Suspension das wasserfreie beziehungsweise nahezu wasserfreie ionische Sulfid gegeben wird.

2. Verfahren zur Herstellung von Organosilylalkylpolysulfanen nach Anspruch 1, **dadurch gekennzeichnet, daß** man ionisches Sulfid mit maximal 10 Gew.-% Wasser einsetzt.

3. Verfahren zur Herstellung von Organosilylalkylpolysulfanen nach Anspruch 1, **dadurch gekennzeichnet, daß** man als organische Lösungsmittel lineare oder verzweigte Alkohole mit 1-8 C-Atomen einsetzt.

4. Verfahren zur Herstellung von Organosilylalkylpolysulfanen der allgemeinen Formel
(R¹R²R³SiR⁴)₂Sₓ (I)
in der bedeuten
R¹, R², R³: gleich oder verschieden voneinander, verzweigte und unverzweigte Alkyl- und/oder Alkoxygruppen mit einer Kettenlänge von 1 - 8 C-Atomen, Arylreste, wobei mindestens eine Alkoxygruppe vorhanden ist,
R⁴ n-Propylen,
x eine Zahl > 1 ist
durch Umsetzung eines Organosilylalkylhalogenids der allgemeinen Formel
R¹R²R³SiR⁴X (II)
in der
R¹, R², R³ und R⁴ die oben angegebene Bedeutung besitzen und
X: Chlor, Brom oder Jod ist
und einem wasserfreien beziehungsweise nahezu wasserfreien ionischen Sulfid der allgemeinen Formel
M⁺ ₂S²⁻ (III)
in der M⁺ für ein Alkalimetallkation, ein Ammoniumion, ein halbes Erdalkalimetallkation oder ein halbes Zinkkation steht,
und elementarem Schwefel, **dadurch gekennzeichnet, daß** in einem polaren organischen Lösungsmittel der elementare Schwefel und Organosilylalkylhalogenid vorgelegt und zu dieser Suspension das wasserfreie beziehungsweise nahezu wasserfreie ionische Sulfid gegeben wird.

## Claims

1. Process for the production of organosilylalkyl polysulfanes of the general formula
(R¹R²R³SiR⁴)₂Sₓ (I)
in which
R¹, R², R³, which are identical to or different from one another, denote branched and unbranched alkyl and/or alkoxy groups with a chain length of 1 - 8 C atoms, aryl radicals, wherein at least one alkoxy group is present,
R⁴ denotes a divalent alkylene radical with a chain length of 1 - 8 C atoms, or
-(CH₂)ₙ-C₆H₄-(CH₂)ₙ-
where n = 1 - 4;
x is a number >1
by reaction of an organosilylalkyl halide of the general formula
R¹R²R³SiR⁴X (II)
in which
R¹, R², R³ and R⁴ have the meanings given above, and
X is chlorine, bromine or iodine,
with an anhydrous or virtually anhydrous ionic sulfide of the general formula
M⁺ ₂S²⁻ (III)
in which M⁺ denotes an alkali metal cation, an ammonium ion, an alkaline earth metal half cation or a zinc half cation,
and elementary sulfur, **characterised in that** the elementary sulfur and organosilylalkyl halide are placed in a polar organic solvent and the anhydrous or virtually anhydrous ionic sulfide is added to this suspension.

2. Process for the production of organosilylalkyl polysulfanes according to claim 1, **characterised in that** an ionic sulfide containing at most 10 wt.% of water is used.

3. Process for the production of organosilylalkyl polysulfanes according to claim 1, **characterised in that** linear or branched alcohols with 1 - 8 C atoms are used as organic solvent.

4. Process for the production of organosilylalkyl polysulfanes of the general formula
(R¹R²R³SiR⁴)₂Sₓ (I)
in which
R¹, R², R³, which are identical to or different from one another, denote branched and unbranched alkyl and/or alkoxy groups with a chain length of 1 - 8 C atoms, aryl radicals, wherein at least one alkoxy group is present,
R⁴ denotes n-propylene;
x is a number >1
by reaction of an organosilylalkyl halide of the general formula
R¹R²R³SiR⁴X (II)
in which
R¹, R², R³ and R⁴ have the meanings given above, and
X is chlorine, bromine or iodine,
with an anhydrous or virtually anhydrous ionic sulfide of the general formula
M⁺ ₂S²⁻ (III)
in which M⁺ denotes an alkali metal cation, an ammonium ion, an alkaline earth metal half cation or a zinc half cation,
and elementary sulfur, **characterised in that** the elementary sulfur and organosilylalkyl halide are placed in a polar organic solvent and the anhydrous or virtually anhydrous ionic sulfide is added to this suspension.

## Revendications

1. Procédé de préparation d'organosilylalkylpolysulfanes de formule générale
(R¹R²R³SiR⁴)₂Sₓ (I)
dans laquelle
R¹, R², R³ , identiques ou différents l'un de l'autre, représentent des groupes alkyle et/ou alcoxy ramifiés ou non ramifiés ayant une longueur de chaîne de 1 à 8 atomes de carbone, ou des restes aryles ayant au moins un groupe alcoxy est présent,
R⁴ représente un radical alkylène bivalent ayant une longueur de chaîne de 1 à 8 atomes de carbone, ou
(CH₂)ₙ-C₆H₄-(CH₂)ₙ-
n valant de 1 à 4 ;
x est un nombre supérieur à 1,
par réaction d'un halogénure d'organosilylalkyle de formule générale
R¹R²R³SiR⁴X (II)
dans laquelle
R¹, R², R³ et R⁴ ont la signification indiquée ci-dessus et
X représente chlore, brome ou iode,
et d'un sulfure ionique anhydre ou presque anhydre de formule générale
M⁺ ₂S²⁻ (III)
dans laquelle M⁺ représente un cation de métal alcalin, un ion ammonium, un demi-cation de métal alcalino-terreux ou un demi-cation de zinc,
ainsi que du soufre élémentaire,
**caractérisé en ce qu'**
on dispose dans un solvant organique polaire le soufre élémentaire et l'halogénure d'organosilylalkyle, et on ajoute à cette suspension le sulfure ionique anhydre ou presque anhydre.

2. Procédé de préparation d'organosilylalkylpolysulfanes selon la revendication 1,
**caractérisé en ce qu'**
on utilise un sulfure ionique comportant au maximum 10% en poids d'eau.

3. Procédé de préparation d'organosilylalkylpolysulfanes selon la revendication 1,
**caractérisé en ce que**
comme solvants organiques on utilise des alcools linéaires ou ramifiés comportant de 1 à 8 atomes de carbone.

4. Procédé de préparation d'organosilylalkylpolysulfanes de formule générale
(R¹R²R³SiR⁴)₂Sₓ (I)
dans laquelle
R¹, R², R³, identiques ou différents, représentent des groupe alkyle et/ou alcoxy ramifiés ou non ramifiés ayant une longueur de chaîne de 1 à 8 atomes de carbone, des radicaux aryle, avec au moins un groupe alcoxy présent,
R⁴ est un n-propylène,
x est un nombre supérieur à 1,
par réaction d'un halogénure d'organosilylalkyle de formule générale
R¹R²R³SiR⁴X (II)
dans laquelle
R¹, R², R³ et R⁴ ont la signification indiquée ci-dessus et
X représente chlore, brome ou iode,
et d'un sulfure ionique anhydre ou presque anhydre de formule générale
M⁺ ₂S²⁻ (III)
dans laquelle M⁺ représente un cation de métal alcalin, un ion ammonium, un demi-cation de métal alcalino-terreux ou un demi-cation de zinc,
ainsi que du soufre élémentaire,
**caractérisé en ce qu'**
on dispose dans un solvant organique polaire le soufre élémentaire et l'halogénure d'organosilylalkyle, et on ajoute à cette suspension le sulfure ionique anhydre ou presque anhydre.
